# EUROPEAN PATENT SPECIFICATION

(11) **EP 2 523 246 B1**
(45) Date of publication and mention of the grant of the patent: **08.03.2017**
(21) Application number: 11425132.5
(22) Date of filing: 11.05.2011
(51) Int. Cl.: H01M 2/02, H01M 2/10, H01M 2/20, H01M 10/48, H01M 10/0525, H01M 10/34

(54) **Modular battery for electric or hybrid vehicles**
Modular-Batterie für Elektro-oder Hybridfahrzeugen
Batterie modulaire pour véhicules électriques ou hybrides

(43) Date of publication of application: 14.11.2012
(73) Proprietor: C.R.F. Società Consortile per Azioni, 10043 Orbassano (Torino) (IT)
(72) Inventor: Perlo, Pietro, 10043 Orbassano (TO) (IT); Ottella, Marco, 10043 Orbassano (TO) (IT); Biasiotto, Marco, 10043 Orbassano (TO) (IT); Perosino, Andrea, 10043 Orbassano (TO) (IT); Pipino, Andrea, 10043 Orbassano (TO) (IT); Liotti, Luca, 10043 Orbassano (TO) (IT); Pallaro, Nereo, 10043 Orbassano (TO) (IT); Carvignese, Cosimo, 10043 Orbassano (TO) (IT)
(74) Representative: Bergadano, Mirko

(56) References cited:
- EP-A1- 2 207 221
- WO-A2-2011/008736
- US-A1- 2008 118 819
- US-A1- 2010 141 208

## Description

### TECHNICAL FIELD OF THE INVENTION

The present invention relates to a modular battery for electric or hybrid vehicles.

### STATE OF THE ART

As known, in recent decades the automotive industry has devoted enormous efforts and investments in the development of electric or hybrid vehicles.

One of the major problems that researchers have come across and that, to date, has prevented the mass distribution of electric or hybrid vehicles is the difficulty to produce a battery that is able to provide satisfactory energy performance in terms of power and duration, and at the same time, is compact, lightweight, and involves relatively low production and maintenance costs.

In particular, a type of battery to which the market is moving is the modular battery, i.e. batteries formed by a plurality of battery modules connected in parallel with each other and each including a plurality of cylindrical cells or batteries connected in series. This type of battery, in fact, makes different assembly solutions possible, as they are adaptable, in a relatively inexpensive and easy way, to different needs of energy supply and space. However, to date, these types of batteries have not yet fully reached their full development, yet they suffer, in general, of the inconvenience of being expensive and not highly reliable due to their complexity both in terms of its actual structure, and of its wiring.

A modular battery is known, for example, from WO2011/008736 which discloses a battery terminal interconnection system that receives battery terminals extending from a plurality of battery modules and shrouds logic and electrically charged interconnections from the environment; wherein a bus bar terminal interconnection panel is operable to connect a plurality of batteries in any desirable configuration.

### DESCRIPTION OF THE INVENTION

The aim of this invention is to present a modular battery for electric or hybrid vehicles, which represents a further development of the modular battery of a known type.

According to the present invention a modular battery is made for electric or hybrid vehicles according to the appended claims.

### BRIEF DESCRIPTION OF THE DRAWINGS

The invention will now be described with reference to the annexed drawings, which illustrate some examples of a nonlimiting embodiment, in which:
- Figure 1 shows, with parts removed for clarity, a first preferred embodiment of the modular battery of the present invention;
- Figure 2 is an exploded view of the modular battery of Figure 1;
- Figure 3 shows, on an enlarged scale, a module forming part of the battery of Figure 1;
- Figure 4 is an exploded view of the module of Figure 3;
- Figure 5 illustrates a variant of the module of Figure 3;
- Figure 6 illustrates a second embodiment of the modular battery of the present invention, and
- Figure 7 illustrates a third embodiment of the modular battery of the present invention.

### PREFERRED EMBODIMENTS OF THE INVENTION

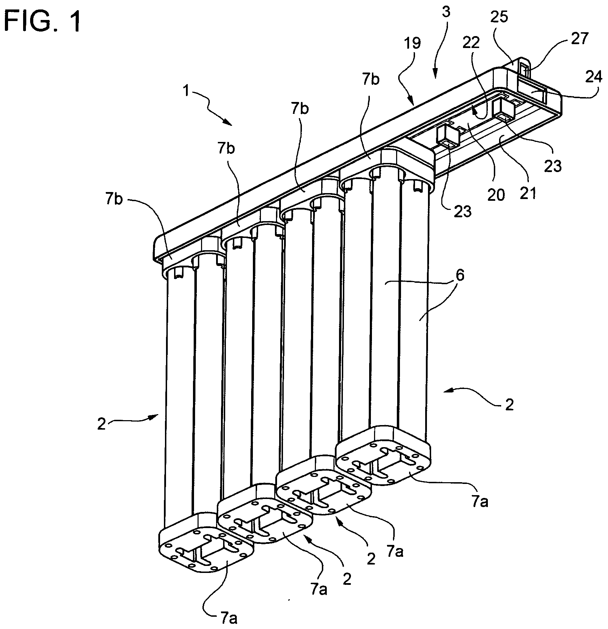

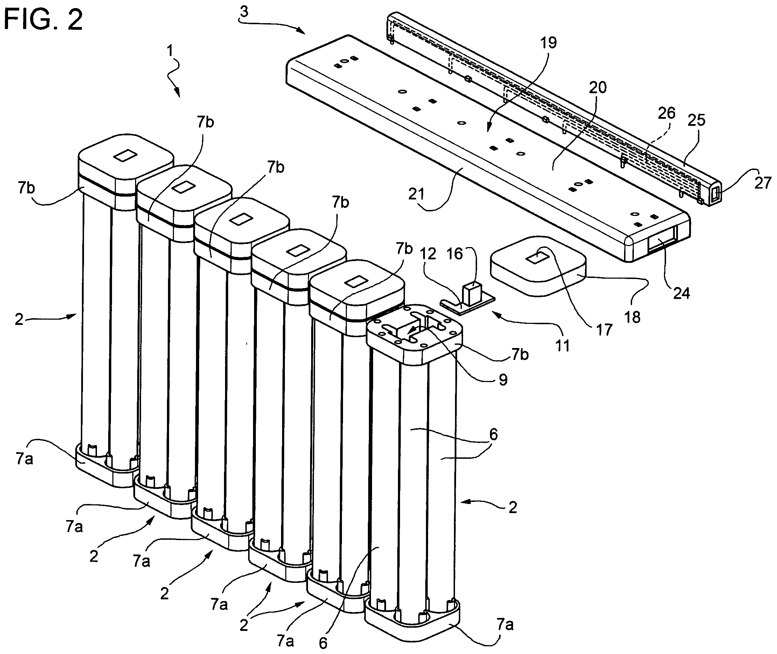

In Figures 1 and 2, with 1 is indicated, as a whole, a modular battery capable of being installed on an electric or hybrid vehicle (not shown).

The modular battery 1 comprises a plurality of battery modules 2 electrically connected in parallel with each other via an electrical battery connector 3, which also serves as a support body 2 of the battery modules themselves.

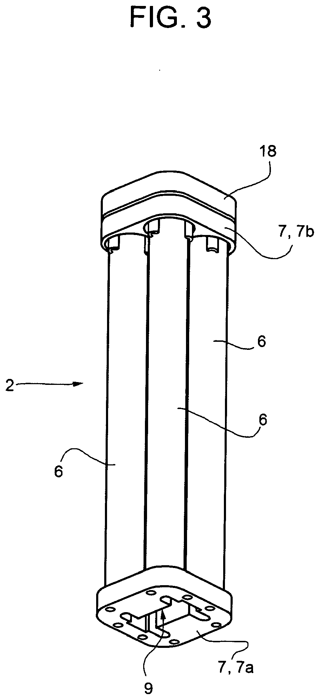

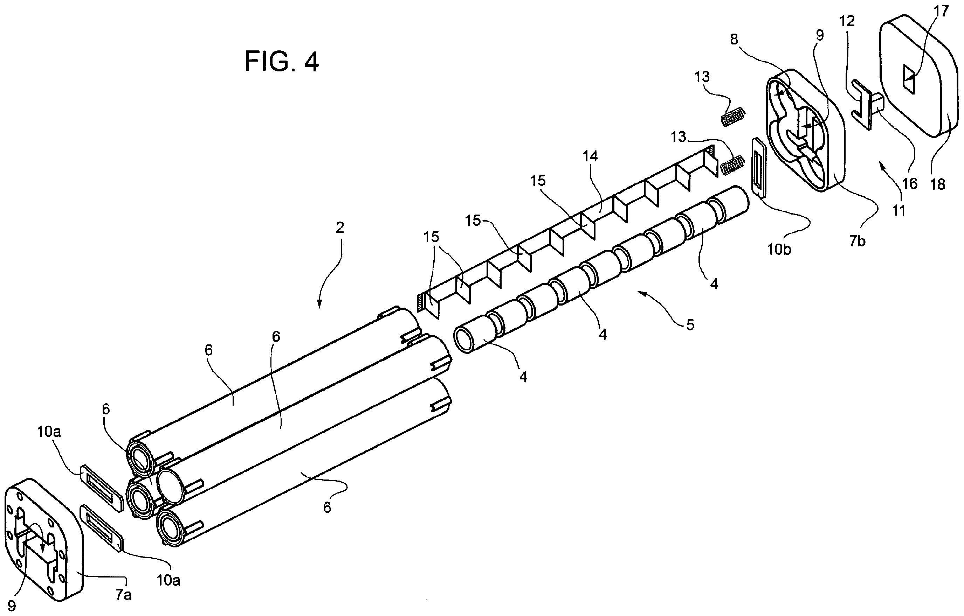

In particular, as illustrated in Figures 3 and 4, each battery module 2 comprises n battery stacks or cells 4 electrically connected in series between them and grouped into k equal groups 5, which are housed in respective casings 6 defined by cylindrical tubes arranged side by side in a compact configuration.

In the case of the example illustrated, the cells 4 are cylindrical cells, preferably lithium-ion or nickel-cadmium batteries, and each battery module 2 comprises thirty-six cells 4 grouped into four equal groups 5 housed in as many casings 6, which are parallel to one another and sided two by two in order to give to the battery module 2, a generally parallelepiped and compact shape. The casings 6 are arranged at a distance from each other to ensure, in use, effective heat dissipation from the cells 4.

With reference to Figure 4, the casings 6 of each battery module 2 are locked in their positions by two retaining elements arranged in correspondence with respective ends of the battery module 2 and defined by two caps 7 placed to close the open axial ends of the casings 6 and connected to each other by the interposition of one or more tension rods (not shown).

Preferably, in order to facilitate the interchangeability of components and contain, therefore, production costs, the two caps 7 are equal to each other and are each provided, on the side facing the casings 6, of a cavity 8 presenting four lobes, each of which is engaged in a removable way, by an end portion of a respective casing 6.

Centrally to the cavity 8, each cap 7 also presents an H-shaped through opening 9, the function of which will be clarified below.

The four groups 5 are connected in series with each other by way of three metal plates, of which two plates 10a are located inside the cavity 8 of one of the two caps 7, indicated below with 7a, and are oriented so that each plate 10a electrically connects together a respective pair of cells 4 with poles of opposite signs; a third plate 10b is arranged, instead, in the cavity 8 of the other cap 7, indicated below with 7b, and is oriented in such a way to electrically connect with each one of the two pairs of cells 4 with poles of opposite signs. The pair of cells 4 not engaged with the plate 10b defines the positive and negative poles of the battery module 2.

As shown in Figures 2 and 4, each battery module 2 comprises a respective module electronic control unit 11, which has the function of monitoring and managing the operation of the respective battery module 2 independently from the other battery modules 2. All electronic units 11 of the modular battery 1 are electrically connected to a battery central electronic control unit (not shown), in turn connected to a electronic control unit of the vehicle (not shown).

In particular, each electronic unit 11 is able to monitor the operation and charge state of the respective battery module 2 by measuring the temperature of the battery module 2 itself, the voltage at the heads of each respective thirty-six cells 4, and the current generated from the cells 4 themselves.

For this purpose, each unit 11 comprises a control card 12, which engages the opening 9 of the cap 7b of the respective battery module 2 and is electrically connected to the pair of cells 4 not engaged by the plate 10b by two springs 13 compressed between the control card 12 and the cells 4 themselves.

The cell voltage signals are relayed to the control card 12 by four flat cables 14, of which only one is illustrated in the attached figures, each of which is associated with a respective group 5, inserted inside the respective casing 6 and is provided with a plurality of terminals 15 adapted to detect the voltage at the heads of each cell 4 of the group 5 itself. Each flat cable 14 is electrically connected to the control card 12 by way of a respective externally protruding free-end portion of the respective casing 6 towards the cap 7b and firmly connected, for example by welding or a suitable connector, to the control card 12 itself. Based on the measurement of the voltage of each cell 4, the control card 12 is configured to produce, where applicable, a passive balance of tension of the individual cells 4.

Each battery module 2 further comprises a current sensor (not shown), which is integrated in the control card 12 to measure the electrical current supplied by the respective battery module 2, thereby permitting the monitoring of charge of the battery module 2 itself, and a temperature sensor, which is also built into the control card 12 to measure the operative temperature of the battery module 2 and therefore allow to verify, in use, that the temperature of the battery module 2 remains within predetermined operative values.

According to a variant, the temperature measurement is made at the level of the individual cells rather than at the level of the battery module, which are for this purpose provided with respective temperature sensors electrically connected to the control card 12 via a flat cable similar to the flat cable 14.

Each electronic unit 11 finally comprises a respective MEMS inertia switch, which is provided with an accelerometer, integrated into the control card 12 and allowing disconnection of the respective battery module 2 in an automatic and independent way from the other battery modules 2 in the case where the modular battery 1 is subjected, in use, to mechanical stress of a determined value.

As shown in Figures 1, 2 and 4, each battery module 2 is provided with a module electrical connector 16 carried by the respective control card 12 and provided with two power terminals connected to the positive and negative poles of the respective battery module 2, and signal terminals on which voltage, current and temperature signals of the respective battery module 2 are present or electrical signals obtained from these. Each module connector 16 extends externally of the respective cap 7b through a hole 17 obtained in a cover 18, which is attached, sealed in a non removable way to the respective cap 7b functioning as protection for the control card 12.

As shown in Figure 1, the battery connector 3 comprises a parallelepipedal body 19, which is defined by a flat rectangular wall 20 and by a side edge 21 defining, with the wall 20, a cavity 22, within which are inserted, one alongside the other, the covers 18 of the battery modules 2.

Inside the cavity 22, the wall 20 holds, in addition, a plurality of electrical connectors 23, which are aligned and spaced one from the other so as to be each engaged with a respective module connector 16 for connecting in parallel between them and to an output power connector 24 arranged on the side edge 21, by appropriate electrical tracks, the power terminals of the module connectors 16 of the battery modules 2.

From the opposite side with respect to the cavity 22, the body 19 carries in a non removable way, a hollow longitudinal appendage 25, which is part of the battery connector 3 and houses a flat electrical cable 26 adapted to electrically connect each module connector 16 to an output signal connector 27 provided at one end of the appendix 25 from the same side of the output power connector 24. For this purpose, the flat cable 26 is provided with a plurality of terminals, each of which protrudes from the appendix 25 and extends through a respective opening cut in the wall 20, up to a corresponding electrical connector 23 to electrically connect with the appropriate module connector 16.

Upon completion of that stated above, it should be noted that the number of battery modules 2, of groups 5 and cells 4 of modular battery 1 in Figure 1 are only by way of example and may differ depending on the available space and/or the requested characteristics of the modular battery 1 in terms of electrical power and available space.

For example, to increase the module voltage it is necessary to increase the number of cells 4 in series in each battery module 2, for example by increasing the number of cells 4 of each of the four groups 5 and/or the number of groups 5, at the same number of cells per group.

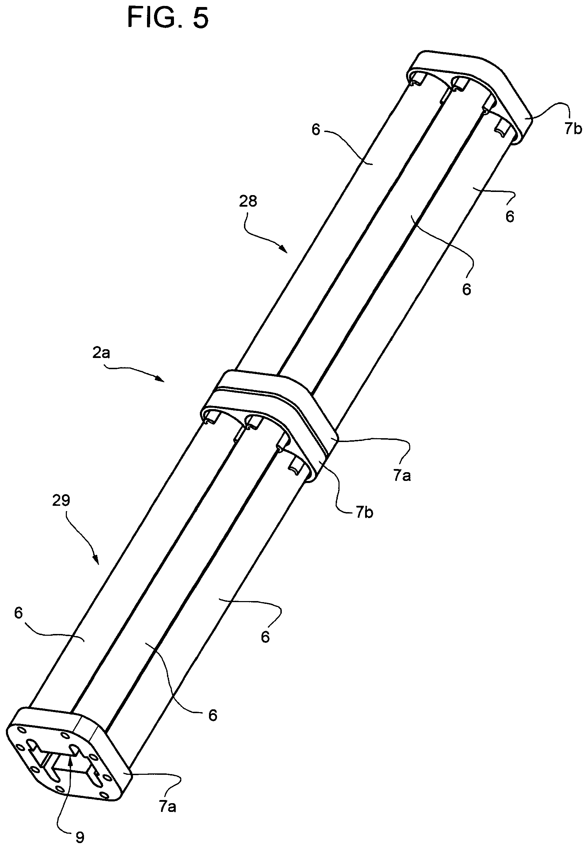

As shown in Figure 5, the same result can be obtained by connecting in series two battery modules 28 and 29 obtained from two battery modules 2 from the above example in order to get a double length battery module 2a.

In particular, the battery module 28, which is the module that is connected to the battery connector 3, is obtained by a battery module 2 simply eliminating, within the respective cap 7a, the serial connection plates 10a of the cells 4, and the battery module 29 is obtained by a battery module 2 eliminating, within the cap 7b, the serial connection plate 10b of the cells 4; the cells 4 of the battery module 28 are connected in series to the cell 4 of the battery module 29 by electrical connectors, such as springs (not shown), placed through the cap 7a of the battery module 28 and the cap 7b of the battery module 29, which caps 7a and 7b are firmly connected together in removable way so as to confer stiffness to the battery module 2a.

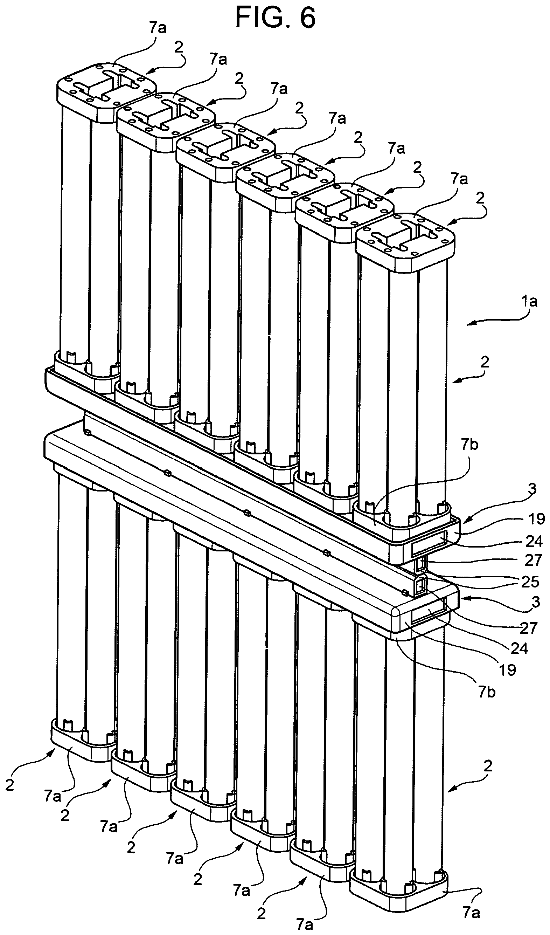

Figure 6 shows a modular battery 1a obtained by connecting in parallel two battery modules of a type shown in Figure 1 so as to duplicate the suppliable electrical power. The two modular batteries 1 are rigidly connected, in a removable way, in correspondence to the respective appendages 25 so that all battery modules 2 of the modular battery 1a are coplanar and confer, in this way, a compact shape and a relatively small encumbrance to the modular battery 1a itself.

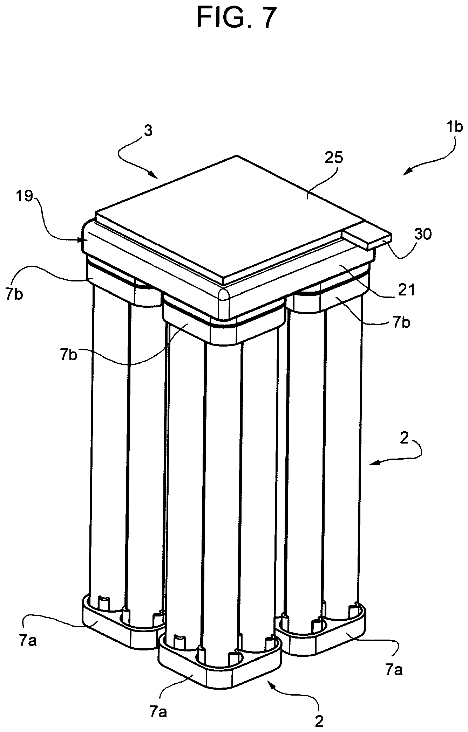

Finally, in Figure 7 is shown a modular battery 1b, which differs from the modular battery 1 of figure 1 for the number and arrangement of the battery modules 2, which, in this case, are four and are sided in pairs. Consequently, the wall 20 and the appendix 25 of the body 19 of the battery connector 3 present a generally square shape; and finally, in this case, the output power and the output signal from the battery module 2 are combined into a single output connector 30 carried by the appendix 25.

From the foregoing, it is clear that the modular battery 1, 1a or 1b offers many recognizable advantages both at the structural level, in terms of compactness and simplicity, and in terms of operational safety and efficiency.

From the structural point of view, in fact, we saw how the architecture of the battery module 2 and, especially, the presence of interchangeable and interfaceable components, such as caps 7a and 7b, allows to obtain a structure remarkably easy to assemble and to maintain, compact, simple and of relatively low cost. In addition, the arrangement of the casings 6 in the respective battery modules 2 and of battery modules 2 in the modular battery 1 allows effective dissipation of heat produced by the cells 4, thereby increasing efficiency compared to conventional batteries.

From a managing perspective, it should be noted that the presence of a local electronic unit 11 for each battery module 2 achieves a control of modular battery 1 at the module level with the advantage of considerably simplifying the wiring and the control unit of the modular battery 1, of a better accuracy in determining the charge state and functioning of the battery modules 2 and of the entire modular battery 1, and greater system reliability due also to the fact of being able to deactivate, if necessary, one or more battery modules 2 in a totally independent way one from the other and without affecting the operation of the remaining battery modules 2.

## Claims

1. A modular battery (1; 1a; 1b) comprising a plurality of battery modules (2; 2a) and a battery electrical connector (3) for electrically connecting in parallel the battery modules (2; 2a); each battery module (2; 2a) comprising n battery stacks or cells (4) connected in series and a module electronic unit (11) configured to control and manage the respective battery module (2; 2a) independently from the other battery modules (2; 2a); the modular battery (1; 1a; 1b) being **characterized in that** the cells (4) in each battery module (2; 2a) are grouped into k equal groups (5); the battery module (2; 2a) comprising k casings (6), each of which houses a respective one of said groups (5), and two retaining elements (7) arranged at respective ends of the battery module (2; 2a) to mutually retain the casings (6).

2. The modular battery according to claim 1, wherein said casings (6) are cylindrical tubes arranged parallel to each other, and said retaining elements (7) are defined by two caps (7a, 7b), each of which is arranged to close open axial ends of the casings (6) at a respective end of the battery module (2; 2a).

3. The modular battery according to claim 2, comprising, for each battery module (2; 2a), electrical connection means (10a, 10b, 13) to electrically connect the cells (4) in series and to the respective electronic module unit (11); said electrical connection means (10a, 10b, 13) being adapted to be arranged between the caps (7a, 7b) and the battery cells (4) facing the caps (7a, 7b).

4. The modular battery according to claim 2 or 3, in which each electronic unit (11) comprises a management board (12) arranged close to one (7b) of the two caps (7a, 7b) of the respective battery module (2; 2a) and provided with an inertial switch operable to disconnect the respective battery module (2; 2a) autonomously and independently from the other battery modules (2; 2a).

5. The modular battery according to claim 4, in which the other (7b) of the two caps (7a, 7b) in each battery module (2, 2a) is configured to allow the battery module (2; 2a) to be electrically connected in series to another battery module (2; 2a).

6. The modular battery according to any of the preceding claims, in which each battery module (2; 2a) comprises voltage sensing means (15) operable to measure a voltage across each battery cell (4) of the battery module (2; 2a).

7. The modular battery according to any of the preceding claims, in which each battery module (2; 2a) comprises temperature sensing means operable to measure an operating temperature of either the battery module (2; 2a) or the individual battery cells (4) in the battery module (2; 2a).

8. The modular battery according to any of the preceding claims, in which each battery module (2; 2a) comprises current sensing means to measure the electrical current supplied from the battery module (2; 2a).

9. The modular battery according to one of claims from 4 to 8, in which each battery module (2; 2a) is provided with a respective module electrical connector (16) carried by the management board (12) to electrically connect the battery module (2; 2a) to said battery electrical connector (3).

10. The modular battery according to claim 9, wherein the battery electrical connector (3) is further configured to rigidly support the battery modules (2; 2a).

## Patentansprüche

1. Modular-Batterie (1; 1a; 1b), die mehrere Batteriemodule (2; 2a) und einen elektrischen Batterieverbinder (3) zum parallelen elektrischen Verbinden der Batteriemodule (2; 2a) aufweist; wobei jedes Batteriemodul (2; 2a) n Batteriestapel oder -zellen (4), die in Reihe geschaltet sind, und eine elektronische Moduleinheit (11) aufweist, die konfiguriert ist, um das jeweilige Batteriemodul (2; 2a) unabhängig von den anderen Batteriemodulen (2; 2a) zu steuern und zu verwalten; wobei die Modular-Batterie (1; 1a; 1b) **dadurch gekennzeichnet ist, dass** die Zellen (4) in jedem Batteriemodul (2; 2a) in k gleiche Gruppen (5) gruppiert sind; wobei das Batteriemodul (2; 2a) aufweist: k Gehäuse (6), von denen jedes eine jeweilige der Gruppen (5) aufnimmt, und zwei Festhalteelemente (7), die an jeweiligen Enden des Batteriemoduls (2, 2a) angeordnet sind, um die Gehäuse (6) gegenseitig festzuhalten.

2. Modular-Batterie nach Anspruch 1, wobei die Gehäuse (6) zylindrische Rohre sind, die parallel zueinander angeordnet sind, und die Festhalteelemente (7) durch zwei Kappen (7a, 7b) definiert sind, von denen jede eingerichtet ist, um offene axiale Enden der Gehäuse (6) an einem jeweiligen Ende des Batteriemoduls (2; 2a) zu schließen.

3. Modular-Batterie nach Anspruch 2, die für jedes Batteriemodul (2; 2a) elektrische Verbindungseinrichtungen (10a, 10b, 13) aufweist, um die Zellen (4) elektrisch in Reihe und mit der jeweiligen elektronischen Moduleinheit (11) zu verbinden; wobei die elektrischen Verbindungseinrichtungen (10a, 10b, 13) angepasst sind, zwischen den Kappen (7a, 7b) und den Batteriezellen (4), die den Kappen (7a, 7b) zugewandt sind, angeordnet zu werden.

4. Modular-Batterie nach Anspruch 2 oder 3, wobei jede elektronische Einheit (11) eine Verwaltungsplatine (12) aufweist, die nahe an einer (7b) der zwei Kappen (7a, 7b) des jeweiligen Batteriemoduls (2; 2a) angeordnet ist und mit einem Trägheitsschalter versehen ist, der betriebsfähig ist, um das jeweilige Batteriemodul (2; 2a) selbständig und unabhängig von den anderen Batteriemodulen (2; 2a) zu trennen.

5. Modular-Batterie nach Anspruch 4, wobei die andere (7b) der zwei Kappen (7a, 7b) in jedem Batteriemodul (2, 2a) konfiguriert ist, um zuzulassen, dass das Batteriemodul (2; 2a) elektrisch in Reihe mit einem anderen Batteriemodul (2; 2a) geschaltet wird.

6. Modular-Batterie nach einem der vorhergehenden Ansprüche, wobei jedes Batteriemodul (2; 2a) Spannungsabtasteinrichtungen (15) aufweist, die betriebsfähig sind, um eine Spannung an jeder Batteriezelle (4) des Batteriemoduls (2; 2a) zu messen.

7. Modular-Batterie nach einem der vorhergehenden Ansprüche, wobei jedes Batteriemodul (2; 2a) Temperaturabtasteinrichtungen aufweist, die betriebsfähig sind, um eine Betriebstemperatur des Batteriemoduls (2; 2a) oder der einzelnen Batteriezellen (4) in dem Batteriemodul (2; 2a) zu messen.

8. Modular-Batterie nach einem der vorhergehenden Ansprüche, wobei jedes Batteriemodul (2; 2a) Stromabtasteinrichtungen aufweist, um den elektrischen Strom, der von dem Batteriemodul (2; 2a) geliefert wird, zu messen.

9. Modular-Batterie nach einem der Ansprüche 4 bis 8, wobei jedes Batteriemodul (2; 2a) mit einem jeweiligen elektrischen Verbinder (16) versehen ist, der von der Verwaltungsplatine (12) gehalten wird, um das Batteriemodul (2; 2a) mit dem elektrischen Batterieverbinder (3) elektrisch zu verbinden.

10. Modular-Batterie nach Anspruch 9, wobei der elektrische Batterieverbinder (3) ferner konfiguriert ist, um die Batteriemodule (2; 2a) starr zu halten.

## Revendications

1. Batterie modulaire (1 ; 1a ; 1b) comprenant une pluralité de modules de batterie (2 ; 2a) et un connecteur électrique de batterie (3) pour connecter électriquement en parallèle les modules de batterie (2 ; 2a) ; chaque module de batterie (2 ; 2a) comprenant n empilements ou cellules de batterie (4) connecté(e)s en série et une unité électronique de module (11) configurée pour contrôler et gérer le module de batterie respectif (2 ; 2a) indépendamment des autres modules de batterie (2 ; 2a) ; la batterie modulaire (1 ; 1a ; 1b) étant **caractérisée en ce que** les cellules (4) dans chaque module de batterie (2 ; 2a) sont groupées selon k groupes égaux (5) ; le module de batterie (2 ; 2a) comprenant k logements (6), dont chacun loge l'un respectif desdits groupes (5), et deux éléments de retenue (7) agencés au niveau d'extrémités respectives du module de batterie (2 ; 2a) afin de retenir de façon mutuelle les logements (6).

2. Batterie modulaire selon la revendication 1, dans laquelle lesdits logements (6) sont des tubes cylindriques agencés parallèlement les uns aux autres, et lesdits éléments de retenue (7) sont définis par deux capuchons (7a, 7b) dont chacun est agencé de manière à fermer des extrémités axiales ouvertes des logements (6) au niveau d'une extrémité respective du module de batterie (2 ; 2a).

3. Batterie modulaire selon la revendication 2, comprenant, pour chaque module de batterie (2 ; 2a), un moyen de connexion électrique (10a, 10b, 13) pour connecter électriquement les cellules (4) en série et à l'unité de module électronique respective (11) ; ledit moyen de connexion électrique (10a, 10b, 13) étant adapté pour être agencé entre les capuchons (7a, 7b) et les cellules de batterie (4) faisant face aux capuchons (7a, 7b).

4. Batterie modulaire selon la revendication 2 ou 3, dans laquelle chaque unité électronique (11) comprend une carte de gestion (12) agencée à proximité de l'un (7b) des deux capuchons (7a, 7b) du module de batterie respectif et munie d'un commutateur inertiel qui peut être actionné pour déconnecter le module de batterie respectif (2 ; 2a) de manière autonome et indépendante par rapport aux autres modules de batterie (2 ; 2a).

5. Batterie modulaire selon la revendication 4, dans laquelle l'autre (7b) des deux capuchons (7a, 7b) dans chaque module de batterie (2 ; 2a) est configuré pour permettre la connexion électrique en série du module de batterie (2 ; 2a) sur un autre module de batterie (2 ; 2a).

6. Batterie modulaire selon l'une quelconque des revendications précédentes, dans laquelle chaque module de batterie (2 ; 2a) comprend un moyen de détection de tension (15) qui peut être actionné pour mesurer une tension aux bornes de chaque cellule de batterie (4) du module de batterie (2 ; 2a).

7. Batterie modulaire selon l'une quelconque des revendications précédentes, dans laquelle chaque module de batterie (2 ; 2a) comprend un moyen de détection de température qui peut être actionné pour mesurer une température de fonctionnement de soit le module de batterie (2 ; 2a), soit les cellules de batterie individuelles (4) dans le module de batterie (2 ; 2a).

8. Batterie modulaire selon l'une quelconque des revendications précédentes, dans laquelle chaque module de batterie (2 ; 2a) comprend un moyen de détection de courant pour mesurer le courant électrique fourni depuis le module de batterie (2 ; 2a).

9. Batterie modulaire selon l'une quelconque des revendications 4 à 8, dans laquelle chaque module de batterie (2 ; 2a) est muni d'un connecteur électrique de module respectif (16) porté par la carte de gestion (12) pour connecter électriquement le module de batterie (2 ; 2a) audit connecteur électrique de batterie (3).

10. Batterie modulaire selon la revendication 9, dans laquelle le connecteur électrique de batterie (3) est en outre configuré pour supporter de façon rigide les modules de batterie (2 ; 2a).
